# FASCICULE DE BREVET EUROPEEN

(11) **EP 3 916 337 B1**
(45) Date de publication et mention de la délivrance du brevet: **28.09.2022**
(21) Numéro de dépôt: 21176352.9
(22) Date de dépôt: 27.05.2021
(51) Int. Cl.: F28D 20/00

(54) **SYSTÈME DE STOCKAGE THERMIQUE PAR MCP PAR CONTACT DIRECT D'UN SOLVANT**
THERMISCHER SPEICHER MIT PHASENWECHSELMATERIAL MIT DIREKTEM KONTAKT ZU EINEM SOLVENT
THERMAL HEAT STORAGE WITH PCM WITH DIRECT CONTACT WITH A SOLVANT

(30) Priorité: 28.05.2020 FR 2005635
(43) Date de publication de la demande: 01.12.2021
(73) Titulaire: Commissariat à l'Energie Atomique et aux Energies Alternatives, 75015 Paris (FR)
(72) Inventeur: VESIN, Sébastien, 38054 GRENOBLE (FR)
(74) Mandataire: Hautier IP

(56) Documents cités:
- EP-A1- 3 489 608
- EP-A1- 3 489 609
- US-A- 4 696 338

## Description

La présente invention concerne le domaine des stockages de chaleur latente utilisant les propriétés d'un matériau à changement de phase (MCP) également dénommés Systèmes de Stockage Thermique (SST) par Matériaux à Changement de Phase (MCP). La présente invention se rapporte particulièrement aux SSTs tel que défini au préambule de la revendication 1, et tel qu'illustré en figure 4 du document EP 3 489 608.

### ÉTAT DE LA TECHNIQUE

Ces stockages de chaleur exploitant la chaleur latente de matériaux à changement de phase (MCP) offrent ainsi l'avantage d'une densité énergétique de stockage élevée (pouvant dépasser 100 kWh/m³) et la possibilité de stocker de la chaleur à haute température en limitant les considérations de tenue à la pression du système. Dans leurs conceptions usuelles, ils sont équipés d'un échangeur thermique interne, alimenté par un fluide caloporteur monophasique ou diphasique qui échange sa chaleur par contact indirect avec le MCP contenu dans la calandre.

Ces systèmes, bien que performants, présentent deux inconvénients majeurs, rendant en l'état leur développement à grande échelle difficilement envisageable et présentant un premier frein à leur déploiement et leur exploitation sur des réseaux de chaleur (urbains ou industriels).

Le premier inconvénient est lié à la nature des MCP considérés, généralement des paraffines d'eutectiques de sels ou de sels hydratés, qui présentent comme lourds désavantages soit une faible enthalpie de changement d'état (≈170 kJ/kg), soit une toxicité/nocivité pour l'homme ou pour l'environnement, soit une forte corrosivité, soit des propensions à la ségrégation ou à la non-congruence (la composition des deux phases est différente), sans compter leurs coûts parfois prohibitifs.

Le second inconvénient est la présence systématique d'un échangeur thermique complexe et volumineux à l'intérieur du système de stockage pour assurer le transfert de chaleur indirecte entre le MCP et le fluide caloporteur. Cette spécificité de design constitue une importante contrainte, dans la mesure où cet échangeur représente environ 40 à 50 % du coût total, constituant de ce fait l'un des freins à la viabilité économique de ces systèmes.

On connait du document FR3074277 un système de stockage thermique comprenant l'injection d'un solvant directement au cœur du MCP. Le MCP étant insoluble dans le solvant. Le solvant fonctionne en diphasique liquide/vapeur et est à la fois utilisé comme fluide caloporteur à contact direct avec le MCP et également comme moyen pour amorcer et accélérer la cristallisation de certains MCP sujets à la surfusion comme les alcools de sucre, grâce à l'agitation générée par son évaporation spontanée dans ce dernier. Dans ce document, le transfert de chaleur, entre le solvant et le fluide caloporteur d'un réseau de chaleur sur lequel est déployé le stockage, est assuré par un échangeur thermique externe. L'externalisation de l'échangeur thermique permet l'utilisation d'échangeurs thermiques plus classiques, moins coûteux et éventuellement disponibles sur le marché. Toutefois, cette solution n'est pas compacte et demande la mise en place d'un circuit de solvant et un échangeur externe.

Un objet de la présente invention est donc de proposer un dispositif de stockage thermique qui gagne en compacité et en réactivité tout en maintenant une densité énergétique de stockage élevée.

Les autres objets, caractéristiques et avantages de la présente invention apparaitront à l'examen de la description suivante et des dessins d'accompagnement. Il est entendu que d'autres avantages peuvent être incorporés.

### RÉSUMÉ

Pour atteindre cet objectif, on prévoit un Système de Stockage Thermique (SST) par Matériau à Changement de Phase (MCP) comprenant :
- une cuve destinée à contenir un MCP solide /liquide et un ciel de gaz (8),
- un module d'injection (6) configuré pour injecter, avantageusement en partie inférieure de la cuve, dans le MCP, un solvant diphasique, à l'état liquide ou à l'état gazeux,
- un module d'évacuation configuré pour évacuer le solvant diphasique à l'état gazeux en partie supérieure de la cuve , opposée à la partie inférieure,
- un système de circulation plongeant dans la cuve, destiné à la circulation d'un fluide caloporteur issu d'un réseau externe de circulation du fluide caloporteur
caractérisé en ce que le système de circulation comprend :
- un condenseur agencé dans le ciel de gaz de la cuve destiné à condenser le solvant à l'état gazeux par circulation du fluide caloporteur, et
- un évaporateur agencé dans la cuve à la surface libre du MCP solide au contact du solvant diphasique à l'état liquide et destiné à évaporer le solvant à l'état liquide par circulation du fluide caloporteur.

Cette conception permet avantageusement de concentrer la plupart, voire la totalité des éléments pressurisés du système à l'intérieur de la cuve du système de stockage, permettant ainsi de n'avoir à gérer qu'une cuve sous pression, lors de la conception et lors de l'éventuelle qualification du système, plutôt qu'une pluralité d'équipements soumis aux mêmes considérations de tenue à la pression. Ce système permet l'utilisation d'échangeurs classiques et cela du fait de leur positionnement limitant voir excluant le contact avec le MCP ce qui permet de s'affranchir des contraintes de résistances pour résister aux changements d'état solide/liquide du MCP.

La compacité du système est augmentée, améliorant par conséquent la densité énergétique du stockage du système.

Ce système de l'invention propose par ailleurs une solution avantageuse pour évaporer directement le solvant lors de la charge du système de stockage, sans avoir à assurer un drainage du solvant liquide vers l'évaporateur situé à l'extérieur du système de stockage. Dans cette conception, avantageusement les vapeurs de solvant formées par évaporation du solvant liquide, remonté et présent à la surface libre du MCP, sont récupérées en partie supérieure du ciel de gaz du stockage puis réinjectées dans le MCP cristallisé pour conduire à sa fusion lors de la charge du moyen de stockage thermique.

Un autre aspect concerne un procédé de stockage et déstockage d'énergie thermique d'un SST tel que décrit ci-dessus caractérisé en ce qu'il comprend une étape de charge du système au cours de laquelle un fluide caloporteur cède sa chaleur, par l'intermédiaire du solvant, à un MCP contenu dans une cuve entrainant la fusion du MCP, comprenant :
- la circulation du fluide caloporteur dans l'évaporateur apportant de l'énergie thermique,
- l'évaporation du solvant à l'état liquide présent à la surface libre du MCP solide par l'évaporateur,
- l'évacuation du solvant à l'état gazeux en partie supérieur de la cuve par le module d'évacuation,
- avantageusement, la circulation du solvant à l'état gazeux dans le circuit de circulation du solvant gazeux,
- avantageusement, la compression du solvant à l'état gazeux par le compresseur,
- l'injection du solvant gazeux, avantageusement en partie inférieure, de la cuve dans le MCP par le module d'injection,
- la condensation du solvant gazeux au contact du MCP solide de sorte à assurer le changement d'état du MCP de l'état solide à liquide.

Un autre aspect concerne un procédé de stockage et déstockage d'énergie thermique d'un SST tel que décrit ci-dessus en ce qu'il comprend une étape de décharge du système au cours de laquelle le MCP cède sa chaleur, par l'intermédiaire du solvant, au fluide caloporteur entrainant la cristallisation du MCP comprenant :
- la circulation du fluide caloporteur dans le condenseur destiné à récupérer de l'énergie thermique,
- la condensation du solvant à l'état gazeux présent dans le ciel de gaz par le condenseur, avantageusement la collecte du solvant condensé,
- l'évacuation du solvant à l'état liquide par le collecteur,
- avantageusement, la circulation du solvant à l'état liquide dans le circuit de circulation du solvant gazeux,
- avantageusement, le pompage du solvant à l'état liquide par la pompe,
- l'injection du solvant liquide avantageusement en partie inférieure, de la cuve dans le MCP liquide par le module d'injection,
- l'évaporation du solvant liquide au contact du MCP qui remonte dans le ciel de gaz de sorte à assurer le changement d'état du MCP de l'état liquide à solide.

### BRÈVE DESCRIPTION DES FIGURES

Les buts, objets, ainsi que les caractéristiques et avantages de l'invention ressortiront mieux de la description détaillée d'un mode de réalisation de cette dernière qui est illustré par les dessins d'accompagnement suivants dans lesquels :
La figure 1 représente un système de stockage selon un mode de réalisation de l'invention illustrant la charge et la décharge.
La figure 2 représente le système de stockage selon un autre mode de réalisation de l'invention.
La figure 3 représente un système de stockage selon une variante de la figure 1 ou de la figure 2 de l'injection du solvant.

Les dessins sont donnés à titre d'exemples et ne sont pas limitatifs de l'invention. Ils constituent des représentations schématiques de principe destinées à faciliter la compréhension de l'invention et ne sont pas nécessairement à l'échelle des applications pratiques.

### DESCRIPTION DÉTAILLÉE

Avant d'entamer une revue détaillée de modes de réalisation de l'invention, sont énoncées ci-après des caractéristiques optionnelles qui peuvent éventuellement être utilisées en association ou alternativement :
Selon un exemple, le SST comprend un collecteur agencé en dessous du condenseur et configuré pour collecter le solvant condensé par le condenseur. Préférentiellement, le condenseur et le collecteur sont agencés dans le ciel de gaz de sorte à ne pas être en contact avec le MCP que ce soit à l'état liquide ou solide ou avec des projections de MCP lors de sa fusion.

Avantageusement, l'évaporateur est agencé à un niveau de hauteur inférieur à celui du collecteur qui est lui-même agencé avantageusement directement sous le condenseur.

Selon un exemple, le SST comprend un circuit de circulation du solvant à l'état liquide agencé entre le collecteur de solvant condensé et le module d'injection et comprenant une pompe d'injection destinée à permettre l'injection du solvant à l'état liquide dans la cuve. Le circuit de circulation peut être au moins partiellement extérieur à la cuve. Pour limiter les déperditions thermiques par exemple, un maximum du circuit est avantageusement placé à l'intérieur de la cuve. Des composants assurant le pompage/compression du solvant ou les organes de régulation pourront être par exemple agencé à l'extérieur de la cuve.

Selon un exemple, le SST comprend un circuit de circulation du solvant à l'état gazeux agencé entre le module d'évacuation et le module d'injection et comprenant un compresseur destiné à permettre l'injection du solvant à l'état gazeux dans la cuve. De même que pour le circuit de circulation du solvant à l'état liquide, le circuit de circulation du solvant à l'état gazeux peut être au moins partiellement extérieur à la cuve.

Selon un exemple, le SST comprend un module de mise en connexion fluidique du condenseur et de l'évaporateur configuré pour assurer la circulation du fluide caloporteur successivement dans le condenseur puis dans l'évaporateur.

Ce module de mise en connexion fluidique du condenseur et de l'évaporateur permet d'augmenter la récupération d'énergie thermique et d'augmenter la surface d'échange et donc potentiellement la puissance thermique lors de la décharge.

Selon un exemple, le SST comprend le condenseur est agencé en couronne suivant la périphérie interne de la cuve. Cette forme favorise la formation d'un canal préférentiel pour le passage ascendant de la vapeur de solvant assurant une fabrication aisée et limitant la restriction à la circulation de la vapeur de solvant 5.

Selon un exemple, l'évaporateur est partiellement en contact avec le MCP.

L'évaporateur est par exemple en contact partiel avec le MCP à la fin de l'étape de décharge le MCP ayant cristallisé par exemple sous forme poreuse et présente alors un volume plus important qu'à l'état liquide. Avantageusement, l'évaporateur présente plus de 50% de sa surface d'échange en contact avec le solvant à l'état liquide.

Selon un exemple, le MCP présente une surfusion correspondant à la différence entre sa température de cristallisation théorique et sa température réelle de cristallisation égale ou supérieure à 2°C.

Selon un exemple, le MCP est insoluble dans le solvant.

Selon un exemple, le MCP est choisi parmi les alcools de sucre, les produits dérivés de sucres alcooliques et les hydrates de sels.

Selon un exemple, le MCP est choisi parmi le Xylitol, le sorbitol, le mannitol, l'érythritol, l'isosorbide et les produits dérivés de l'isosorbide, ainsi que leurs mélanges.

Selon un exemple, le solvant est de l'éthanol.

Selon un exemple, le procédé comprend la mise en connexion fluidique du condenseur et de l'évaporateur configuré pour assurer la circulation du fluide caloporteur successivement dans le condenseur pour condenser le solvant à l'état gazeux du ciel gazeux et dans l'évaporateur, configuré dans ce cas en second condenseur, pour refroidir le solvant à l'état liquide à la surface libre du MCP. Cette mise en connexion du condenseur et de l'évaporateur est avantageusement mise en place à la fin de l'état de décharge lorsque le MCP présente une température inférieure à la température d'évaporation du solvant, le solvant liquide injecté en partie inférieure remonte en partie supérieure sans être évaporé, mais en étant réchauffé. Pour augmenter la récupération d'énergie thermique, l'évaporateur reçoit le fluide caloporteur réchauffé du condenseur. Avantageusement, la température du fluide caloporteur est inférieure à la température d'évaporation du solvant liquide. Préférentiellement, la température du fluide caloporteur est inférieure à la température du solvant liquide permettant ainsi une récupération supplémentaire d'énergie thermique par le fluide caloporteur.

Selon un exemple, la pression gazeuse dans la cuve est ajustée de sorte à contrôler la température de changement d'état du solvant.

La gestion de la pression du ciel de gaz dans lequel s'établit l'équilibre liquide-vapeur du solvant permet de contrôler la température d'évaporation ou de condensation du solvant et donc la température de sortie ou la puissance thermique absorbée ou transférée au fluide caloporteur du réseau de chaleur par l'intermédiaire des échangeurs thermiques condensant ou évaporant le solvant suivant les phases de fonctionnement.

Pour la suite de la description, on entend par 'haut' et 'bas', ou leurs dérivés, une qualité de positionnement relatif d'un élément du SST lorsque celui-ci est installé de façon fonctionnelle, le 'haut' étant orienté à l'opposé du sol et le 'bas' étant orienté vers le sol. L'extrémité supérieure se situe en haut et l'extrémité inférieure se situe en bas.

L'invention concerne un Système de Stockage thermique (SST). Le stockage de l'énergie thermique permet à la chaleur d'être utilisée en différé. La chaleur peut être stockée sous plusieurs formes. L'invention s'attache au stockage sous la forme de chaleur latente avec l'utilisation de matériaux à changement de phase qui emmagasinent l'énergie à mesure qu'ils changent de phase. Lorsque le matériau atteint sa température de changement de phase, il absorbe une quantité de chaleur pour réaliser la transformation, connue sous le nom de chaleur latente de fusion ou de vaporisation selon le cas. A l'inverse, lorsque le matériau liquide ou gaz est refroidi, il retourne à la phase solide ou liquide en restituant sa chaleur latente.

Bien que la chaleur latente de fusion soit plus faible que la chaleur latente d'évaporation, la transition solide-liquide est la plus prometteuse puisqu'elle permet de limiter l'expansion volumique et ainsi l'augmentation de pression due au changement de phase.

Le SST selon l'invention utilise préférentiellement un MCP 2, ou un mélange de MCP, diphasique, solide/liquide. Dans la suite de la description, l'utilisation de l'expression "un MCP" n'est pas limitative et peut s'entendre comme un mélange de MCP.

Le SST selon l'invention comprend une cuve 1 contenant un MCP 2. La cuve 1, également dénommée calandre, est préférentiellement cylindrique pour des raisons de conception mécanique. Avantageusement, la cuve 1 s'étend suivant une direction principale verticale. La cuve 1 est une enceinte, c'est-à-dire qu'elle est close à l'exception des ouvertures décrites.

Le SST est configuré pour recevoir un solvant diphasique liquide/gaz utilisé comme fluide de transfert de chaleur pour assurer l'échange thermique entre le MCP et un fluide caloporteur d'un réseau de chaleur.

Le SST selon l'invention est destiné à la circulation d'un solvant dans la cuve au contact direct du MCP.

Le SST selon l'invention comprend un module d'injection 6 d'un solvant diphasique dans la cuve 1. Le solvant diphasique est destiné à être en contact directe avec le MCP 2. Le module d'injection 6 est configuré pour injecter le solvant soit à l'état gazeux, soit à l'état liquide.

Préférentiellement, le module d'injection 6 est agencé en partie inférieure de la cuve 1, c'est-à-dire dans le tiers inférieur de la cuve 1 plus préférentiellement, le module d'injection 6 est disposé à l'extrémité inférieure de la cuve 1, c'est-à-dire à proximité immédiate du fond 10 de la cuve 1.

Le module d'injection 6 comprend préférentiellement au moins un injecteur, selon une possibilité deux ou plusieurs injecteurs sont prévus pour améliorer la diffusion du solvant dans la cuve 1 et plus précisément dans le MCP 2.

Selon une autre possibilité, le module d'injection 6 comprend une rampe d'injection 13 agencée préférentiellement selon la hauteur de la cuve 1 dans le volume du MCP 2. La rampe d'injection 13, parcourant par exemple l'intégralité de la hauteur du volume occupé par le MCP, est pourvue d'ouvertures pour injecter le solvant, à l'état de vapeur ou liquide suivant toute la hauteur ou uniquement en point bas.

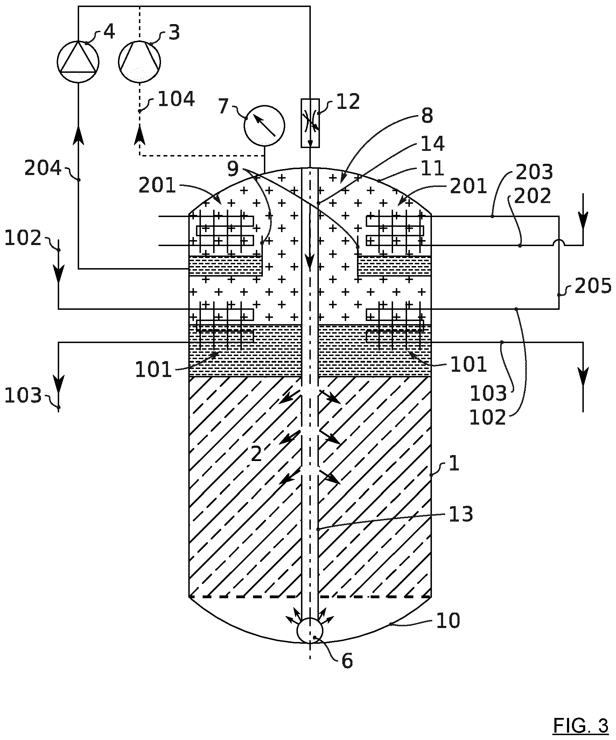

Selon un exemple illustré à la figure 3, le module d'injection 6 comprend une rampe de distribution agencée préférentiellement selon la hauteur de la cuve 1, c'est-à-dire avantageusement de la partie supérieure à la partie inférieure de la cuve 1. La rampe de distribution comprend une portion pleine 14 agencée au niveau du ciel de gaz. La portion pleine 14 ne comprend pas d'ouverture pour l'injection du solvant mais permet d'amener le solvant au niveau de la rampe d'injection 13 pourvue d'ouvertures pour injecter le solvant, à l'état de vapeur ou liquide suivant toute la hauteur du volume du MCP. Selon cet exemple, le solvant pénètre dans la cuve en partie supérieure par la rampe de distribution. Selon une possibilité, l'injection du solvant à l'état liquide ou à l'état gazeux est active. A cet effet, le SST comprend une pompe d'injection 4 du solvant à l'état liquide et/ou un compresseur 3 du solvant à l'état gazeux permettant l'injection du solvant par le module d'injection 6 respectivement à l'état liquide ou gazeux.

Selon un mode de réalisation, le SST comprend un régulateur 12 de débit de solvant injecté dans la cuve 1.

Le SST comprend également un module d'évacuation 7 du solvant à l'état gazeux. Le module d'évacuation 7 comprend préférentiellement au moins une valve d'évacuation. Selon une possibilité, le module d'évacuation 7 permet la régulation de la pression à l'intérieur de la cuve 1, pour adapter la température d'évaporation / condensation du solvant diphasique

Préférentiellement, le module d'évacuation 7 est agencé en partie supérieure de la cuve 1 c'est-à-dire dans le tiers supérieur de la cuve 1 plus préférentiellement, le module d'évacuation 7 est disposé à l'extrémité supérieure de la cuve 1, c'est-à-dire à proximité immédiate du plafond 11 de la cuve 1.

Ces dispositions particulières permettent de prévoir un parcours le plus long possible pour le solvant cheminant dans le MCP 2 contenu dans la cuve 1.

Le solvant utilisé est diphasique entre deux états : liquide/gaz. Il est choisi de sorte à avoir une température d'ébullition dans la gamme d'utilisation du MCP. À titre d'exemple, l'éthanol pur qui présente une température d'ébullition de l'ordre de 78°C à la pression atmosphérique constitue un solvant diphasique particulièrement adapté à l'utilisation du Xylitol, dont la température de cristallisation est proche de 93°C, comme MCP, d'autant que ces deux constituants ne sont pas solubles l'un dans l'autre.

Avantageusement, le solvant est avantageusement choisi pour que le MCP y soit non miscible ou encore non soluble. Avantageusement, le solvant est également non miscible ou non soluble dans le MCP. Cette caractéristique permet de créer des sites de nucléation accélérant la vitesse de cristallisation.

Le MCP n'étant pas miscible dans le solvant, la quantité de solvant pouvant être introduit dans la cuve 1 est importante.

À titre d'exemple préféré, le solvant est choisi parmi l'éthanol, le méthanol, l'acétone.

Avantageusement, le SST comprend un ciel de gaz 8. Le ciel de gaz 8 comprend les vapeurs de solvant et éventuellement un gaz incondensable, possiblement inerte, si le MCP est sensible à l'oxydation.

La gestion de la pression du ciel de gaz 8 permet de contrôler la température d'évaporation ou de condensation du solvant. De plus, la gestion de la pression du ciel de gaz 8 dans lequel s'établit l'équilibre liquide-vapeur du solvant permet de contrôler la température d'évaporation ou de condensation du solvant et donc la température de sortie ou la puissance thermique absorbée ou transférée au fluide caloporteur du réseau de chaleur par l'intermédiaires des échangeurs thermiques décrits ci-après (condensant ou évaporant le solvant suivant les phases de fonctionnement).

Le ciel de gaz 8 est mis en place au-dessus du MCP 2 pour notamment éviter la perte du MCP par vaporisation et permet d'absorber les variations volumiques du MCP 2 au cours des changements de phase liées aux cycles de charge et de décharge du SST. La présence d'un gaz inerte présente l'avantage de ne pas réagir avec le MCP 2 pour éviter notamment son oxydation. Ce gaz inerte est emporté avec le solvant gazeux qui est évacué, mais n'est pas condensable, dans les conditions d'exploitation du SST (température, pression), et est donc avantageusement réintroduit dans la cuve 1.

Les incondensables du ciel gazeux 8 sont réinjectés par le module d'injection 6 du solvant seul ou en mélange avec le solvant à l'état gazeux.

Lors de la phase qui conduit à la condensation du solvant à l'état gazeux, le gaz inerte également présent dans le ciel de gaz 8, reste dans le ciel de gaz 8 puisqu'il est incondensable dans les conditions d'exploitation (pression, température) du SST.

Selon l'invention, le SST comprend un système de circulation d'un fluide caloporteur plongeant dans la cuve 1. Le système de circulation d'un fluide caloporteur comprend au moins deux échangeurs thermiques internes à la cuve 1 destinés à transférer l'énergie thermique entre le solvant et un fluide caloporteur issu d'un réseau externe de circulation du fluide caloporteur. Avantageusement, un échangeur thermique est dit échangeur supérieur et un échangeur thermique est dit échangeur inférieur. L'échangeur supérieur est avantageusement agencé au-dessus de l'échangeur inférieur.

Le système de circulation du fluide caloporteur comprend un condenseur 201, agencé dans la cuve 1, avantageusement formé au moins par l'échangeur supérieur et selon une possibilité, dans un fonctionnement lors de l'étape de décharge, par l'échangeur supérieur et l'échangeur inférieur. Le système de circulation du fluide caloporteur comprend un évaporateur 101 agencé dans la cuve 1, formé par l'échangeur inférieur. Dans la suite de la description, le condenseur 201 correspond à l'échangeur supérieur et l'évaporateur 101 à l'échangeur inférieur.

Le condenseur 201 est avantageusement agencé dans le ciel de gaz 8 de sorte à être en contact du solvant à l'état gazeux. Le condenseur 201 est destiné à condenser le solvant à l'état gazeux par circulation du fluide caloporteur.

Le condenseur 201, et avantageusement le collecteur 9, sont de préférence placés suffisamment haut, dans le ciel de gaz 8 par rapport au MCP 2, pour ne pas être en contact ni avec le MCP et ni avec ses éventuelles projections générées lors du fonctionnement du système. Il faut considérer que le fonctionnement du système lors de la décharge et plus particulièrement l'action d'évaporer un solvant dans le MCP, conduit possiblement à la formation d'un milieu poreux, perméable et continu au sein du MCP cristallisé. Le MCP cristallisé sous la forme d'un milieu poreux présente une montée de son niveau, consécutive à la diminution de sa masse volumique apparente, un milieu poreux occupe plus d'espace qu'un milieu dense de masse équivalente. Ce positionnement permet de conserver le condenseur 201 fonctionnel, c'est à dire en contact du ciel de gaz 8, et permet avantageusement de limiter le risque d'ingestion de MCP au niveau du collecteur 9.

Selon un mode de réalisation, le condenseur 201 comprend une entrée de fluide caloporteur 202 et une sortie de fluide caloporteur 203. L'entrée 202 et la sortie 203 sont configurées pour être connectées à un réseau de fluide caloporteur par exemple un réseau de chaleur. L'entrée 202 et la sortie 203 sont configurées pour traverser la paroi de la cuve 1. Préférentiellement, le condenseur 201 est configuré pour faire circuler le fluide caloporteur dans un circuit formant une surface d'échange thermique avec le ciel de gaz et donc avec le solvant à l'état gazeux.

Le fluide caloporteur 202 pénètre dans le condenseur par l'entrée 202 à une température inférieure à la température de rosée du solvant suivant la fraction de gaz inerte éventuellement présent dans le ciel de gaz 8 et la pression dans la cuve 1. L'entrée du fluide caloporteur d'un réseau de chaleur dans le condenseur 201, à une température inférieure à la température de condensation du solvant diphasique suivant la fraction de gaz inerte présent éventuellement dans le ciel de gaz 8 et la pression dans la cuve 1 entraine la condensation des vapeurs de solvant en réchauffant le fluide caloporteur du réseau de chaleur.

Préférentiellement, le condenseur 201 est disposé en couronne suivant la périphérie interne de la cuve 1. Cette configuration est notamment favorable en matière de conception et de fabrication. Cette forme de courone favorisera la formation d'un canal préférentiel pour le passage ascendant de la vapeur de solvant, à l'instar d'un conduit de cheminée.

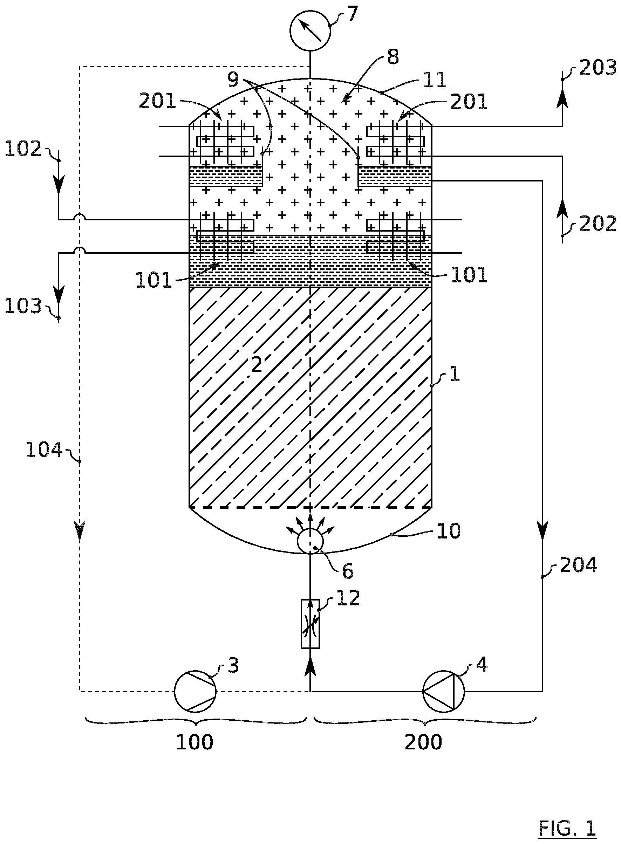

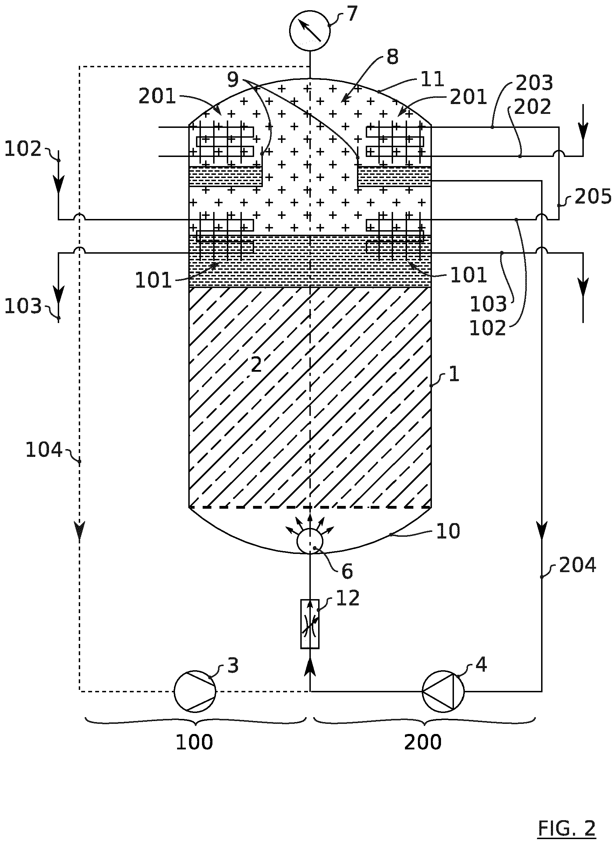

Avantageusement, le SST comprend un collecteur 9 configuré pour récupérer l'ensemble du solvant condensé par le condenseur 201. Le collecteur 9 est par exemple une coupelle agencée sous le condenseur 201 configurée pour récupérer le solvant condensé, solvant à l'état liquide également dénommé condensat. Selon une possibilité, le collecteur 9 est avantageusement configuré de sorte que le solvant liquide récupéré n'entre pas en contact avec le condenseur 201, sous peine de réduire la surface d'échange du condenseur 201 exposée aux vapeurs de solvant. Cette possibilité est préférée notamment dans le mode de réalisation de la figure 2 dans lequel un fluide caloporteur circule successivement dans le condenseur 201 puis dans l'évaporateur 101, jouant le rôle d'un condenseur complémentaire. Selon une autre possibilité, le collecteur 9 peut être en contact avec le solvant liquide récupéré assurant un sous-refroidissement du condensat de solvant, permettant d'extraire plus de chaleur lors de la décharge. Cette possibilité est avantageusement privilégiée dans le cadre du mode de réalisation de la figure 1, dans lequel le condenseur 201 et l'évaporateur 101 ne sont pas connecté fluidiquement.

L'évaporateur 101 est agencé dans la cuve 1. L'évaporateur 101 est destiné à évaporer le solvant à l'état liquide 5 par circulation du fluide caloporteur. L'évaporateur 101 est avantageusement agencé au moins partiellement dans le ciel de gaz 8. L'évaporateur 101 est préférentiellement agencé en dessous du condenseur 201 et plus précisément en dessous du collecteur 9. L'évaporateur 101 est agencé de sorte à être en contact au moins partiel avec le solvant à l'état liquide 5. Préférentiellement, l'évaporateur 101 est agencé au-dessus du MCP 2 et plus précisément du MCP 2 à l'état solide, pouvant être poreux. Le MCP 2 à l'état solide définit une surface libre. Cette surface libre du MCP est selon le fonctionnement du SST en contact de solvant liquide 5 ou du ciel de gaz 8.

Le solvant liquide 5 à la surface libre du MCP 2 provient du solvant gazeux condensé lors de la cristallisation du MCP au cours de la décharge qui migre à la surface libre du MCP compte tenu de leurs masses volumiques respectives différentes.

Selon une possibilité, l'évaporateur 101 s'étend sur une partie ou sur la totalité de la section de la cuve 1. Préférentiellement, l'évaporateur 101 est agencé dans le volume occupé par le solvant liquide 5 présent à la surface du MCP solide. Plus la surface d'échange thermique de l'évaporateur 101 est importante et plus la puissance transférable indirectement du fluide caloporteur du réseau vers le MCP 2 par l'intermédiaire du solvant est importante. Il est essentiel que la majorité et de préférence la totalité de la surface d'échange thermique de l'évaporateur 101 soit en contact avec un volume de solvant liquide pour permettre la formation de vapeur de solvant lors de la charge.

Compte tenu de la différence des masses volumiques entre le solvant liquide et le MCP liquide, il est attendu que le solvant liquide condensé lors de la charge remonte naturellement à la surface du MCP liquide formé et entretienne ainsi le mécanisme.

L'évaporateur 101 est avantageusement configuré de sorte à laisser libre la circulation de la vapeur de solvant formée, jusqu'au ciel de gaz 8 lors de la décharge. Selon une possibilité, l'évaporateur peut être agencé en contact avec le MCP, préférentiellement partiellement en contact avec le MCP et préférentiellement au niveau de la surface du MCP.

Le fluide caloporteur du réseau de chaleur est choisi selon les applications à titre d'exemple :
- le fluide caloporteur est de l'eau notamment pour les applications de stockage de chaleur basses températures, i.e. inférieures à 100°C,
- le fluide caloporteur est de l'eau surchauffée pressurisée notamment pour les applications de stockage de chaleur moyennes températures, i.e. supérieures à 100°C,
- le fluide caloporteur est de la vapeur notamment pour les applications de stockage de chaleur hautes températures, i.e. souvent supérieures à 150°C,
- le fluide caloporteur est une huile thermique, notamment pour les applications de stockage de chaleur hautes températures, i.e. jusqu'à 300°C.

Le système comprend avantageusement un système de circulation du solvant. Le système de circulation comprend préférentiellement le module d'injection 6 et le module d'évacuation 7. Le système de circulation comprend également un circuit de circulation du solvant à l'état liquide 204 entre le collecteur 9 et le module d'injection 6 et un circuit de circulation du solvant gazeux 104 entre le module d'évacuation 7 et le module d'injection 6.

Le système de circulation du solvant permet de faire pénétrer à l'intérieur de la cuve 1 et donc dans le MCP 2, le solvant directement au contact du MCP. Le solvant est diphasique de sorte à changer d'état, avantageusement de manière spontanée, au contact du MCP ayant emmagasiné de la chaleur ; le solvant est choisi pour que le MCP n'y soit pas soluble préférentiellement de sorte à générer des sites de nucléations pour accélérer la vitesse de cristallisation.

De cette manière, l'addition de solvant diphasique dans le MCP contribue à modifier favorablement les propriétés du MCP et donc accélérer la vitesse de cristallisation tout en permettant le chauffage du solvant introduit au contact du MCP. Le chauffage du solvant entraine son ébullition générant un bullage du solvant dans le MCP déclenchant ainsi la cristallisation du MCP.

Le solvant est utilisé comme fluide caloporteur en contact direct avec le MCP, en décharge le MCP cède sa chaleur au solvant à l'état liquide entrainant la cristallisation du MCP, en charge le solvant à l'état gazeux cède sa chaleur au MCP entrainant la fusion du MCP. L'énergie thermique récupérée ou cédée par le solvant est transférée au niveau d'un échangeur thermique externe avec le fluide caloporteur du réseau externe.

L'injection du solvant diphasique dans lequel le MCP est non miscible permet donc de manière efficace de contrôler la cristallisation du MCP et notamment le déclenchement et la vitesse de cristallisation.

Le solvant à l'état gazeux est évacué par le module d'évacuation 7 pour limiter l'augmentation de la pression dans la cuve et permettre le recyclage du solvant.

Préférentiellement, l'invention s'applique à tous les MCP sujets au phénomène de surfusion. La surfusion est la capacité du MCP à descendre sous le point de cristallisation tout en restant sous forme liquide. Pour l'invention, un MCP est considéré comme sujet à la surfusion à partir d'un degré de surfusion de 2°C, préférentiellement 5°C, ce qui peut alors limiter, particulièrement durant les longues périodes de stockage de l'énergie thermique la décharge du SST.

Pour l'invention, la surfusion est calculée comme correspondant à la différence entre la température de cristallisation théorique et la température réelle de cristallisation. La température réelle de cristallisation étant inférieure à la température théorique de cristallisation. Des degrés de surfusion beaucoup plus élevés peuvent également être résolus par l'invention, par exemple, le Xylitol peut descendre sans difficulté en surfusion jusqu'à la température ambiante. Compte tenu de sa température de cristallisation considérée entre 93°C et 95°C, le degré de surfusion du Xylitol peut être dans ce cas d'environ 70°C.

Préférentiellement, le MCP est choisi parmi les composés organiques et notamment les sucres alcooliques appartenant à la famille des polyols, préférentiellement le sorbitol, le mannitol, le xylitol, le lactitol, et l'érythritol, ainsi que leurs mélanges ou les produits dérivés de sucres alcooliques comme l'isosorbide et les produits dérivés de l'isosorbide ou leurs mélanges. Des mélanges des composés organiques peuvent être utilisés. Les MCP ci-dessus listés sont extraits des plantes et peuvent être qualifiés de biosourcés.

Les alcools de sucre ou polyols possèdent des valeurs d'enthalpie de phase élevées. On relève ainsi une enthalpie de fusion de 344 J/g pour l'érythritol, de 280 J/g pour le xylitol ou encore 341 J/g pour le mannitol. Ils présentent aussi une grande masse volumique de l'ordre de 1500 kg/m3 (par exemple à l'état solide), ce qui conduit à une densité énergétique très élevée. Ce sont par ailleurs des produits peu coûteux et non toxiques.

Préférentiellement, le MCP est choisi parmi les hydrates de sel qui sont des sels inorganiques qui contiennent de l'eau et dont la formule générale est AB.nH₂O. Pendant la charge, la déshydratation du sel a lieu. Le produit de cette déshydratation peut être un hydrate de sel avec moins de molécules d'eau selon la formule :
AB.nH₂O→AB.mH₂O+(n-m)H₂O ; ou bien le même sel sous sa forme anhydre : AB.nH₂O→AB+nH₂O.

Préférentiellement, CaCl₂.6H₂O, Mn(NO₃)2.6H₂O, Al₂(SO₄)3.18H₂0, la bischofite comme exemple d'un mélange d'hydrates de sels composé à 95% massique de MgCl2.6H₂O et à 5% massique de KMgCl₃.6H₂O, Li₂SO₄.H₂O et ayant une température de fusion autour de 98.9°C.

À titre d'exemple préféré, l'acétate de sodium tri hydrate, est un sel hydraté ou eutectique pouvant être utilisé comme MCP dans le cadre de l'invention.

Le SST fonctionne suivant trois phases majeures : la charge, le stockage et la décharge.
- Une phase dite de charge, durant laquelle le fluide caloporteur cède sa chaleur au MCP 2, entrainant la fusion de celui-ci. Plus précisément, le fluide caloporteur cède sa chaleur au MCP 2 par l'intermédiaire du solvant. La température du solvant est alors supérieure à la température de fusion du MCP 2 et son sens de circulation dans le MCP est préférentiellement ascendant. En effet, le solvant est préférentiellement envoyé sous forme gazeuse avantageusement sous forme de vapeur surchauffée à travers le MCP solide 2, préférentiellement au niveau de la partie inférieure de la cuve 1. Au contact du MCP 2, le solvant va se condenser et remonter vers le ciel de gaz 8 du fait d'une plus faible masse volumique du solvant par rapport au MCP 2. Le solvant liquide 5 se positionne avantageusement à la surface du MCP 2. Le solvant liquide 5 à la surface du MCP 2 est en contact de l'évaporateur 101 dans lequel circule le fluide caloporteur à une température supérieure à la température d'évaporation du solvant dans les conditions de pression du ciel de gaz 8. Préférentiellement, l'évaporateur 101 conduit dans un premier temps au réchauffage du solvant liquide en contact avec sa surface externe, puis à sa progressive évaporation avantageusement jusqu'à atteindre la pression de vapeur saturante du solvant dans le ciel de gaz 8 qui évolue en fonction de la température. Le solvant s'évapore et passe à l'état gazeux. Le fluide caloporteur apporte de l'énergie thermique qui est stockée dans le MCP. Le solvant à l'état gazeux est évacué de la cuve 1 par le module d'évacuation 7. Le module d'évacuation 7 est avantageusement relié au module d'injection 6 par le circuit de circulation du solvant à l'état gazeux 104. Le solvant à l'état gazeux est mis en circulation dans le circuit de circulation 104 par le compresseur 3. Le solvant gazeux comprimé est à nouveau injecté dans la cuve 1 au contact du MCP 2.
- Une phase, dite de stockage, au cours de laquelle la circulation du fluide caloporteur dans le condenseur 201 et dans l'évaporateur 101, et avantageusement du solvant est arrêtée et le MCP 2 conserve l'énergie thermique stockée.
- Une phase dite de décharge durant laquelle le MCP liquide 2 cède sa chaleur au fluide caloporteur, plus précisément le MCP 2 cède sa chaleur au fluide caloporteur par l'intermédiaire du solvant. Le solvant circule à une température inférieure à la température de solidification du MCP 2, entrainant la cristallisation du matériau et le réchauffement du solvant. Le solvant circule préférentiellement dans le sens ascendant. En effet, le solvant est préférentiellement envoyé sous forme liquide à travers le MCP2, préférentiellement en partie inférieure de la cuve 1. Au contact du MCP 2 à l'état liquide, le solvant, initialement à l'état liquide, va s'évaporer et les vapeurs de solvants vont progressivement remonter à travers le MCP, liquide au début de la décharge, puis progressivement au fil de la décharge à travers le milieu poreux qui se forme au cœur du MCP en phase de cristallisation, jusqu'à la surface du MCP au niveau du ciel de gaz 8. Le solvant gazeux dans le ciel de gaz 8 entre en contact avec le condenseur 201 dans lequel le fluide caloporteur circule à une température inférieure à la température de condensation du solvant dans les conditions de pression du ciel de gaz 8. Le solvant se condense et passe à l'état liquide par contact avec le condenseur 201. Le fluide caloporteur récupère l'énergie thermique stockée dans le MCP. Le solvant à l'état liquide 5 condensé est récupéré par le collecteur 9 avantageusement connecté au circuit de circulation du solvant à l'état liquide 204. Le solvant à l'état liquide est mis en circulation dans le circuit de circulation 204 avantageusement par la pompe 4. Le circuit de circulation 204 assure la connexion entre le collecteur 9 et le module d'injection 6. Le solvant à l'état liquide est réinjecté dans la cuve 1 directement au contact du MCP 2 par le module d'injection 6.

Ce fonctionnement conduisant à la décharge du moyen de stockage peut être entretenu jusqu'au moment où la température du MCP ne permet plus l'évaporation du débit de solvant liquide injecté.

Selon une possibilité, l'échangeur thermique inférieur, dénommé évaporateur 101 lors de la charge, est mis en connexion fluidique avec le condenseur 201 par une branche de mise en connexion 205. L'évaporateur 101 reçoit le fluide caloporteur issu du condenseur 201. Le fluide caloporteur circule dans l'évaporateur 101, ayant un rôle d'échangeur thermique complémentaire, pour chauffer le fluide caloporteur du réseau de chaleur en refroidissant le condensat du solvant présent à la surface libre du MCP après avoir traverser le MCP 2. Ce condensat de solvant correspond au débit du solvant liquide injecté qui n'est pas suffisamment chauffé pour passer à l'état gazeux au contact du MCP 2. Avantageusement, selon cette possibilité, le fluide caloporteur du réseau de chaleur alimentera en série les deux échangeurs thermiques en commençant par le condenseur 201 (échangeur thermique supérieur) puis par l'évaporateur 101 l'échangeur thermique inférieur (évaporateur lors de la charge). Ce mode de fonctionnement est illustré en figure 2.

### Exemple

Dans le cas d'un SST exploitant un alcool de sucre comme MCP et l'éthanol comme solvant diphasique, les masses volumiques suivantes peuvent être considérées pour un exemple de système.

| Fonction dans le système | Constituant | Masse volumique |
|---|---|---|
| MCP | Alcool de sucre (type Xylitol) - Solide | ≈ 1500 kg/m³ |
| | Alcool de sucre (type Xylitol) - Liquide | ≈ 1350 kg/m³ |
| Fluide caloporteur diphasique *(échange thermique à contact direct avec le MCP)* | Solvant (type Ethanol) - Liquide | ≈ 740 kg/m³ |
| | Solvant (type Ethanol) - Vapeur | ≈ 1,6 kg/m³ |

Dans cette nouvelle conception d'un SST, le solvant fonctionne en diphasique liquide/gaz et est à la fois utilisé comme fluide caloporteur à contact direct avec le MCP et également comme moyen très performant pour amorcer et accélérer la cristallisation du MCP grâce à l'agitation générée par son évaporation spontanée dans ce dernier. Le transfert de chaleur entre le solvant et le fluide caloporteur du réseau de chaleur sur lequel est avantageusement déployé le SST est préférentiellement assuré par échange thermique interne à la cuve, par un évaporateur et par un condenseur, suivant les phases de charge ou de décharge du SST.

L'invention n'est pas limitée aux modes de réalisations précédemment décrits et s'étend à tous les modes de réalisation couverts par les revendications.

### LISTE DES REFERENCES

- 1.: Cuve
- 2.: MCP
- 3.: Compresseur
- 4.: Pompe
- 5.: condensat de solvant
- 6.: Module d'injection du solvant
- 7.: Module d'évacuation du solvant à l'état gazeux
- 8.: Ciel de gaz
- 9.: Collecteur
- 10.: Fond de cuve
- 11.: Plafond de cuve
- 12.: Régulateur du débit de solvant injecté dans la cuve
- 13.: Rampe d'injection de solvant
- 14.: Portion pleine
- 100.: Charge
- 101.: Evaporateur
- 102.: Entrée fluide caloporteur chaud
- 103.: Sortie fluide caloporteur refroidit
- 104.: Circuit de vapeur de solvant
- 200.: Décharge
- 201.: Condenseur
- 202.: Entrée fluide caloporteur froid
- 203.: Sortie fluide caloporteur réchauffé
- 204.: Circuit de solvant liquide
- 205.: Branche de mise en série du condenseur et de l'évaporateur

## Revendications

1. Système de Stockage Thermique (SST) par Matériau à Changement de Phase (MCP) (2) comprenant :
• une cuve (1) destinée à contenir un MCP (2) solide /liquide et un ciel de gaz (8),
• un module d'injection (6) configuré pour injecter dans la cuve (1), dans le MCP (2), un solvant diphasique, à l'état liquide ou à l'état gazeux,
• un module d'évacuation (7) configuré pour évacuer le solvant diphasique à l'état gazeux en partie supérieure de la cuve (1), opposée à la partie inférieure,
• un système de circulation plongeant dans la cuve (1), destiné à la circulation d'un fluide caloporteur issu d'un réseau externe de circulation du fluide caloporteur (20,21)
**caractérisé en ce que** le système de circulation comprend :
• un condenseur (201) agencé dans le ciel de gaz (8) de la cuve (1) destiné à condenser le solvant à l'état gazeux par circulation du fluide caloporteur, et
• un évaporateur (101) agencé dans la cuve (1) à la surface libre du MCP solide au contact du solvant diphasique à l'état liquide et destiné à évaporer le solvant à l'état liquide par circulation du fluide caloporteur.

2. SST selon la revendication 1 comprenant un collecteur (9) agencé en dessous du condenseur (201) et configuré pour collecter le solvant condensé par le condenseur (201).

3. SST selon la revendication précédente comprenant un circuit de circulation, du solvant à l'état liquide (204), agencé entre le collecteur (9) de solvant condensé et le module d'injection (6) et comprenant une pompe (4) d'injection destinée à permettre l'injection du solvant à l'état liquide dans la cuve (1).

4. SST selon l'une quelconque des revendications précédentes comprenant un circuit de circulation, du solvant à l'état gazeux (104), agencé entre le module d'évacuation (7) et le module d'injection (6) et comprenant un compresseur (3) destiné à permettre l'injection du solvant à l'état gazeux dans la cuve (1).

5. SST selon l'une quelconque des revendications précédentes comprenant un module de mise en connexion fluidique du condenseur (201) et de l'évaporateur (101) configuré pour assurer la circulation du fluide caloporteur successivement dans le condenseur (201) puis dans l'évaporateur (101).

6. SST selon l'une quelconque des revendications précédentes dans lequel le condenseur (201) est agencé en couronne suivant la périphérie interne de la cuve (1).

7. SST selon l'une quelconque des revendications précédentes dans lequel l'évaporateur (101) est partiellement en contact avec le MCP.

8. SST selon l'une quelconque des revendications précédentes dans lequel le MCP est insoluble dans le solvant.

9. SST selon l'une quelconque des revendications précédentes dans lequel le MCP (2) est choisi parmi les alcools de sucre, les produits dérivés de sucres alcooliques et les hydrates de sels.

10. SST selon la revendication précédente dans lequel le MCP (2) est choisi parmi le Xylitol, le sorbitol, le mannitol, l'érythritol, l'isosorbide et les produits dérivés de l'isosorbide, ainsi que leurs mélanges.

11. SST selon l'une quelconque des revendications précédentes dans lequel le solvant est de l'éthanol.

12. Procédé de stockage et déstockage d'énergie thermique d'un SST selon l'une quelconque des revendications précédentes **caractérisé en ce qu'**il comprend une étape de charge du système au cours de laquelle un fluide caloporteur cède sa chaleur, par l'intermédiaire du solvant, à un MCP (2) contenu dans une cuve (1) entrainant la fusion du MCP (2), comprenant :
• la circulation du fluide caloporteur dans l'évaporateur (101) apportant de l'énergie thermique,
• l'évaporation du solvant à l'état liquide présent à la surface libre du MCP (2) solide par l'évaporateur (101),
• l'évacuation du solvant à l'état gazeux en partie supérieur de la cuve (1) par le module d'évacuation (7),
• l'injection du solvant gazeux en partie inférieure de la cuve (1) dans le MCP par le module d'injection (6),
• la condensation du solvant gazeux au contact du MCP solide de sorte à assurer le changement d'état du MCP de l'état solide à liquide.

13. Procédé de stockage et déstockage d'énergie thermique d'un SST selon l'une quelconque des revendications 1 à 11 **caractérisé en ce qu'**il comprend une étape de décharge du système au cours de laquelle le MCP (2) cède sa chaleur, par l'intermédiaire du solvant, au fluide caloporteur entrainant la cristallisation du MCP comprenant :
• la circulation du fluide caloporteur dans le condenseur (201) destiné à récupérer de l'énergie thermique,
• la condensation du solvant à l'état gazeux présent dans le ciel de gaz (8) par le condenseur (201),
• l'évacuation du solvant à l'état liquide par le collecteur (9),
• l'injection du solvant liquide en partie inférieure de la cuve (1) dans le MCP liquide par le module d'injection (6),
• l'évaporation du solvant liquide au contact du MCP qui remonte dans le ciel de gaz de sorte à assurer le changement d'état du MCP de l'état liquide à solide.

14. Procédé selon la revendication précédente comprenant la mise en connexion fluidique du condenseur (201) et de l'évaporateur (101) configuré pour assurer la circulation du fluide caloporteur successivement dans le condenseur (201) pour condenser le solvant à l'état gazeux du ciel gazeux (8) et dans l'évaporateur (101) pour refroidir le solvant à l'état liquide à la surface libre du MCP.

15. Procédé selon l'une quelconque des trois revendications précédentes dans lequel la pression gazeuse dans la cuve (1) est ajustée de sorte à contrôler la température de changement d'état du solvant.

## Patentansprüche

1. Thermisches Speichersystem (SST) mit Phasenwechselmaterial (PCM) (2), das Folgendes umfasst:
- einen Behälter (1), der dazu bestimmt ist, ein festes/flüssiges PCM (2) und ein Gaspolster (8) zu enthalten,
- ein Einspritzmodul (6), das konfiguriert ist, um ein zweiphasiges Lösungsmittel im flüssigen Zustand oder im gasförmigen Zustand in den Behälter (1) in das PCM (2) einzuspritzen,
- ein Abführmodul (7), das konfiguriert ist, um das zweiphasige Lösungsmittel im gasförmigen Zustand aus dem oberen Teil des Behälters (1) gegenüber dem unteren Teil abzuführen,
- ein Zirkulationssystem, das sich in dem Behälter (1) befindet und für das Zirkulieren eines Wärmeträgerfluids aus einem externen Wärmeträgerfluid-Zirkulationsnetz (20, 21) ausgelegt ist,
**dadurch gekennzeichnet, dass** das Zirkulationssystem Folgendes umfasst:
- einen Kondensator (201), der im Gaspolster (8) des Behälters (1) angeordnet und dazu bestimmt ist, das Lösungsmittel im gasförmigen Zustand durch Zirkulieren des Wärmeträgerfluids zu kondensieren, und
- einen Verdampfer (101), der im Behälter (1) an der freien Oberfläche des festen PCM in Kontakt mit dem zweiphasigen Lösungsmittel im flüssigen Zustand angeordnet und dazu bestimmt ist, das Lösungsmittel im flüssigen Zustand durch Zirkulieren des Wärmeträgerfluids zu verdampfen.

2. SST nach Anspruch 1, umfassend eine Auffangvorrichtung (9), die unterhalb des Kondensators (201) angeordnet und konfiguriert ist, um das durch den Kondensator (201) kondensierte Lösungsmittel aufzufangen.

3. SST nach dem vorhergehenden Anspruch, umfassend einen Zirkulationskreislauf für das Lösungsmittel im flüssigen Zustand (204), der zwischen der Auffangvorrichtung (9) des kondensierten Lösungsmittels und dem Einspritzmodul (6) angeordnet ist und eine Einspritzpumpe (4) umfasst, die dazu bestimmt ist, die Einspritzung des Lösungsmittels im flüssigen Zustand in den Behälter (1) zu gestatten.

4. SST nach einem der vorhergehenden Ansprüche, umfassend einen Zirkulationskreislauf für das Lösungsmittel im gasförmigen Zustand (104), der zwischen dem Abführmodul (7) und dem Einspritzmodul (6) angeordnet ist und einen Kompressor (3) umfasst, der dazu bestimmt ist, die Einspritzung des Lösungsmittels im gasförmigen Zustand in den Behälter (1) zu gestatten.

5. SST nach einem der vorhergehenden Ansprüche, umfassend ein Modul zur Herstellung einer Fluidverbindung zwischen dem Kondensator (201) und dem Verdampfer (101), das konfiguriert ist, um das Zirkulieren des Wärmeträgerfluids nacheinander in den Kondensator (201) und dann in den Verdampfer (101) zu gewährleisten.

6. SST nach einem der vorhergehenden Ansprüche, wobei der Kondensator (201) kranzförmig entlang des inneren Umfangs des Behälters (1) angeordnet ist.

7. SST nach einem der vorhergehenden Ansprüche, wobei der Verdampfer (101) teilweise in Kontakt mit dem PCM steht.

8. SST nach einem der vorhergehenden Ansprüche, wobei das PCM nicht löslich im Lösungsmittel ist.

9. SST nach einem der vorhergehenden Ansprüche, wobei das PCM (2) ausgewählt ist aus Zuckeralkoholen, von alkoholischen Zuckern abgeleiteten Produkten und Salzhydraten.

10. SST nach dem vorhergehenden Anspruch, wobei das PCM (2) ausgewählt ist aus Xylit, Sorbit, Mannit, Erythrit, Isosorbid und von Isosorbid abgeleiteten Produkten sowie deren Mischungen.

11. SST nach einem der vorhergehenden Ansprüche, wobei das Lösungsmittel Ethanol ist.

12. Verfahren zum Speichern und Wiedergewinnen von thermischer Energie aus einem SST nach einem der vorhergehenden Ansprüche, **dadurch gekennzeichnet, dass** es einen Schritt des Ladens des Systems umfasst, während dem ein Wärmeträgerfluid seine Wärme über das Lösungsmittel an ein in einem Behälter (1) enthaltenen PCM (2) überträgt, was die Fusion des PCM (2) bewirkt, umfassend:
- Zirkulieren des Wärmeträgerfluids im Verdampfer (101), die die thermische Energie unterstützt,
- Verdampfen des Lösungsmittels im flüssigen Zustand, das sich auf der freien Oberfläche des festen PCM (2) befindet, durch den Verdampfer (101),
- Abführen des Lösungsmittels im gasförmigen Zustand im oberen Teil des Behälters (1) durch das Abführmodul (7),
- Einspritzen des gasförmigen Lösungsmittels im unteren Teil des Behälters (1) im PCM durch das Einspritzmodul (6),
- Kondensieren des gasförmigen Lösungsmittels in Kontakt mit dem festen PCM, um die Zustandsänderung des PCM vom festen in den flüssigen Zustand zu gewährleisten.

13. Verfahren zum Speichern und Wiedergewinnen von thermischer Energie aus einem SST nach einem der Ansprüche 1 bis 11, **dadurch gekennzeichnet, dass** es einen Schritt zum Entladen des Systems umfasst, während dem das PCM (2) seine Wärme über das Lösungsmittel an das Wärmeträgerfluid überträgt, was die Kristallisation des PCM bewirkt, umfassend:
- Zirkulieren des Wärmeträgerfluids im Kondensator (201), der dazu bestimmt ist, die thermische Energie zurückzugewinnen,
- Kondensieren des Lösungsmittels im gasförmigen Zustand, das sich im Gaspolster (8) befindet, durch den Kondensator (201),
- Abführen des Lösungsmittels im flüssigen Zustand durch die Auffangvorrichtung (9),
- Einspritzen des flüssigen Lösungsmittels im unteren Teil des Behälters (1) in das flüssige PCM durch das Einspritzmodul (6),
- Verdampfen des flüssigen Lösungsmittels in Kontakt mit dem PCM, das in das Gaspolster steigt, um die Zustandsänderung des PCM vom flüssigen in den festen Zustand zu gewährleisten.

14. Verfahren nach dem vorhergehenden Anspruch, umfassend das Herstellen einer Fluidverbindung zwischen dem Kondensator (201) und dem Verdampfer (101), die konfiguriert ist, das Zirkulieren des Wärmeträgerfluids nacheinander in den Kondensator (201) zum Kondensieren des Lösungsmittels im gasförmigen Zustand aus dem Gaspolster (8) und in den Verdampfer (101) zum Abkühlen des Lösungsmittels im flüssigen Zustand an der freien Oberfläche des PCM zu gewährleisten.

15. Verfahren nach einem der drei vorhergehenden Ansprüche, wobei der Gasdruck im Behälter (1) derart eingestellt ist, dass die Temperatur der Zustandsänderung des Lösungsmittels kontrolliert wird.

## Claims

1. Thermal Storage System (TSS) by Phase Change Material (PCM) (2) comprising:
- a tank (1) intended to contain a solid/liquid PCM (2) and an ullage space (8),
- an injection module (6) configured to inject a two-phase solvent, in the liquid or gaseous state, into the PCM (2) in the tank (1),
- an exhaust module (7) configured to exhaust the two-phase solvent in the gaseous state from the upper part of the tank (1), opposite the lower part,
- a circulation system immersed in the tank (1), intended to circulate a heat transfer fluid from an external heat transfer fluid circulation network (20, 21)
**characterised in that** the circulation system comprises:
- a condenser (201) arranged in the ullage space (8) of the tank (1) intended to condense the solvent in the gaseous state by the circulation of the heat transfer fluid, and
- an evaporator (101) arranged in the tank (1) at the free surface of the solid PCM in contact with the two-phase solvent in the liquid state and intended to evaporate the solvent in the liquid state by the circulation of the heat transfer fluid.

2. TSS according to claim 1, comprising a header (9) arranged below the condenser (201) and configured to collect the solvent condensed by the condenser (201).

3. TSS according to the preceding claim, comprising a liquid solvent circulation circuit (204), arranged between the condensed solvent header (9) and the injection module (6) and comprising an injection pump (4) intended to allow the solvent in the liquid state to be injected into the tank (1).

4. TSS according to any one of the preceding claims, comprising a gaseous solvent circulation circuit (104), arranged between the exhaust module (7) and the injection module (6) and comprising a compressor (3) intended to allow the solvent in the gaseous state to be injected into the tank (1).

5. TSS according to any one of the preceding claims, comprising a module for the fluid connection of the condenser (201) and the evaporator (101) configured to ensure that the heat transfer fluid circulates successively in the condenser (201) and then in the evaporator (101).

6. TSS according to any one of the preceding claims, wherein the condenser (201) is arranged in a ring along the inner periphery of the tank (1).

7. TSS according to any one of the preceding claims, wherein the evaporator (101) is partially in contact with the PCM.

8. TSS according to any one of the preceding claims, wherein the PCM is insoluble in the solvent.

9. TSS according to any one of the preceding claims, wherein the PCM (2) is selected from sugar alcohols, products derived from alcoholic sugars and salt hydrates.

10. TSS according to the preceding claim, wherein the PCM (2) is selected from Xylitol, sorbitol, mannitol, erythritol, isosorbide and isosorbide derivatives, and mixtures thereof.

11. TSS according to any one of the preceding claims, wherein the solvent is ethanol.

12. Thermal energy storage and release method of a TSS according to any one of the preceding claims, **characterised in that** it comprises a system charging step during which a heat transfer fluid transfers its heat, via the solvent, to a PCM (2) contained in a tank (1), causing the PCM (2) to melt, comprising:
- the circulation of the heat transfer fluid in the evaporator (101) providing thermal energy,
- the evaporation of the liquid solvent present at the free surface of the solid PCM (2) by the evaporator (101),
- the exhausting of the gaseous solvent from the upper part of the tank (1) by the exhaust module (7),
- the injection of the gaseous solvent in the lower part of the tank (1) into the PCM by the injection module (6),
- the condensation of the gaseous solvent in contact with the solid PCM so as to procure the change of state of the PCM from solid to liquid.

13. Thermal energy storage and release method of a TSS according to any one of claims 1 to 11, **characterised in that** it comprises a system discharging step during which the PCM (2) transfers its heat, via the solvent, to the heat transfer fluid, causing the PCM to crystallise, comprising:
- the circulation of the heat transfer fluid in the condenser (201) intended to recover thermal energy,
- the condensation of the gaseous solvent present in the ullage space (8) by the condenser (201),
- the removal of the liquid solvent via the header (9),
- the injection of the liquid solvent in the lower part of the tank (1) into the liquid PCM by the injection module (6),
- the evaporation of the liquid solvent in contact with the PCM which rises into the ullage space so as to procure the change of state of the PCM from liquid to solid.

14. Method according to the preceding claim, comprising producing a fluid connection between the condenser (201) and the evaporator (101) configured to ensure that the heat transfer fluid circulates successively in the condenser (201) to condense the solvent in the gaseous state in the ullage space (8) and then in the evaporator (101) to cool the solvent in the liquid state at the free surface of the PCM.

15. Method according to any one of the preceding three claims, wherein the gas pressure in the tank (1) is adjusted so as to control the phase change temperature of the solvent.
